# EUROPÄISCHE PATENTSCHRIFT

(11) **EP 0 823 357 B1**
(45) Veröffentlichungstag und Bekanntmachung des Hinweises auf die Patenterteilung: **12.09.2001**
(21) Anmeldenummer: 97112648.7
(22) Anmeldetag: 23.07.1997
(51) Int. Cl.: B60R 22/03

(54) **Einrichtung zum Bewegen einer Steckzunge eines Sicherheitsgurtes in eine ergonomisch günstige Präsentationsstellung**
Arrangement for moving a seat belt buckle tongue in an ergonomically favorable presentation position
Dispositif pour déplacer le pêne de verrouillage d'une ceinture de sécurité dans une position de présentation ergonomique

(30) Priorität: 02.08.1996 DE 29613427 U
(43) Veröffentlichungstag der Anmeldung: 11.02.1998
(73) Patentinhaber: TRW Occupant Restraint Systems GmbH & Co. KG, 73551 Alfdorf (DE)
(72) Erfinder: Paschek, Joachim, 70563 Stuttgart (DE); Biller, Dieter, 73553 Alfdorf-Brech (DE); Petzi, Jürgen, 73312 Geislingen-Eybach (DE)
(74) Vertreter: Kitzhofer, Thomas, Dipl.-Ing.

(56) Entgegenhaltungen:
- DE-A- 3 616 452
- GB-A- 2 171 892
- US-A- 5 261 696
- US-A- 5 431 446

## Beschreibung

Die Erfindung betrifft eine Einrichtung zum Bewegen einer Steckzunge eines Sicherheitsgurtes aus einer zum Ein- und Aussteigen eines Fahrzeuginsassen geeigneten Ruhestellung in eine ergonomisch günstige Präsentationsstellung nach dem Oberbegriff der Ansprüche 1 oder 7.

Eine bekannte Einrichtung verwendet eine Schienenführung, die sich von der B-Säule in den seitlichen Dachholm erstreckt. Auf der Schiene fährt nach dem Einsteigen des Insassen ein Schlitten mit dem Haltebügel darauf bis vorderhalb seines Kopfes, wo der Insasse das auf dem Haltebügel ruhende Beschlagteil, ohne seinen Oberkörper verdrehen zu müssen, leicht erfassen kann, um sich anzugurten.

Eine weitere bekannte Einrichtung umfaßt eine Linearführung, die im Bereich der B-Säule in die Seitenwand des Fahrzeugs integriert ist. Nach dem Einsteigen des Insassen wird eine Stange aus der Seitenverkleidung linear nach vorn herausbewegt, die den Haltebügel bis vorderhalb der Schulter des Insassen bringt. Diese bekannte Einrichtung ist teuer und benötigt relativ viel Bauraum im Bereich der B-Säule, so daß sie die räumliche Gestaltung des Seitenwandbereichs zwischen der Bund der C-Säule stark einschränkt.

Aus der US-A-5 431 446 ist eine Einrichtung zum Bewegen der Steckzunge eines Sicherheitsgurtes bekannt, die seitlich eines Fahrzeugsitzes angebracht ist und bei der ein Schneckengetriebe im Bereich des Schwenklagers des Schwenkarms vorgesehen ist, über das das notwendige Drehmoment auf den Schwenkarm bei der Betätigung der Einrichtung übertragen wird.

Die GB-A-2 171 892 beschreibt ebenfalls eine Einrichtung zum Bewegen der Steckzunge eines Sicherheitsgurtes, bei der eine Zahnstange einen Haltearm für den Sicherheitsgurt bewegt. Die Bewegung des Schwenkarms ist eine kombinierte Schwenk- und Linearbewegung, denn der Schwenkarm hat eine langgestreckte Führungsnut, durch die sich ein Lagerstift erstreckt. Die Lagerung muß aufgrund der kombinierten Schwenk- und Linearbewegung stets gut abgedichtet sein. Aufgrund der Größe des Lagers ergeben sich damit aber Probleme bei der Unterbringung der Einrichtung samt Abdichtung im Fahrzeug.

Die DE-A-36 16 452 zeigt eine gattungsgemäße Einrichtung, bei der der Schwenkarm über ein Viergelenk angetrieben wird, welches ebenfalls einen hohen Platzbedarf im Fahrzeug aufweist.

Die Erfindung schafft eine einfachere und kostengünstigere Einrichtung, die leicht an unterschiedliche Einbausituationen angepaßt werden kann, ohne daß die Funktion der Einrichtung dadurch eingeschränkt wird. Die erfindungsgemäße Einrichtung baut sehr klein und erlaubt es, einzelne Teile von ihr an räumlich weit auseinanderliegenden Orten im Fahrzeug unterzubringen. Dies wird durch eine Einrichtung nach Anspruch 1 oder 7 erreicht.

Der Antrieb ist ein Exzenterantrieb, bei dem vorzugsweise die Exzentrität des vorgesehenen Mitnehmers verstellbar ist.

Der Schwenkarm kann, abhängig vom Fahrzeugtypen im Bereich der B-Säule, im Bereich des Fahrzeugsitzes seitlich an diesem oder an einem seitlichen Längsträger des Fahrzeugs gelagert sein.

Bei einer weiteren vorteilhaften Ausführungsform ist der Antrieb mit einer Schubstange gekoppelt, die am Schwenkarm angelenkt ist. Durch Verwendung einer Schubstange kann der Abstand zwischen Schwenklagerung und Antrieb besonders groß sein.

Vorzugsweise sind Möglichkeiten zur Verstellung der Lage des Schwenkbereichs und seines Schwenkwinkels vorgesehen, damit die Einrichtung ohne Verwendung grundlegend anderer Teile an einen anderen Fahrzeugtyp angepaßt werden kann.

Weitere Merkmale und Vorteile der Erfindung ergeben sich aus der folgenden Beschreibung von bevorzugten Ausführungsformen und aus den Zeichnungen, auf die Bezug genommen wird. In den Zeichnungen zeigen:
- Figur 1 eine erste Ausführungsform der erfindungsgemäßen Einrichtung mit einem Exzenterantrieb;
- Figur 2 eine zweite Ausführungsform der erfindungsgemäßen Einrichtung mit einem Schubkurbelgetriebe; Einrichtung mit einer Zahnstange als Schubkurbel;
- Figuren 3 bis 6 Einbauvarianten der erfindungsgemäßen Einrichtung.

Gleiche Teile bei den verschiedenen Ausführungsformen tragen gleiche Bezugszeichen.

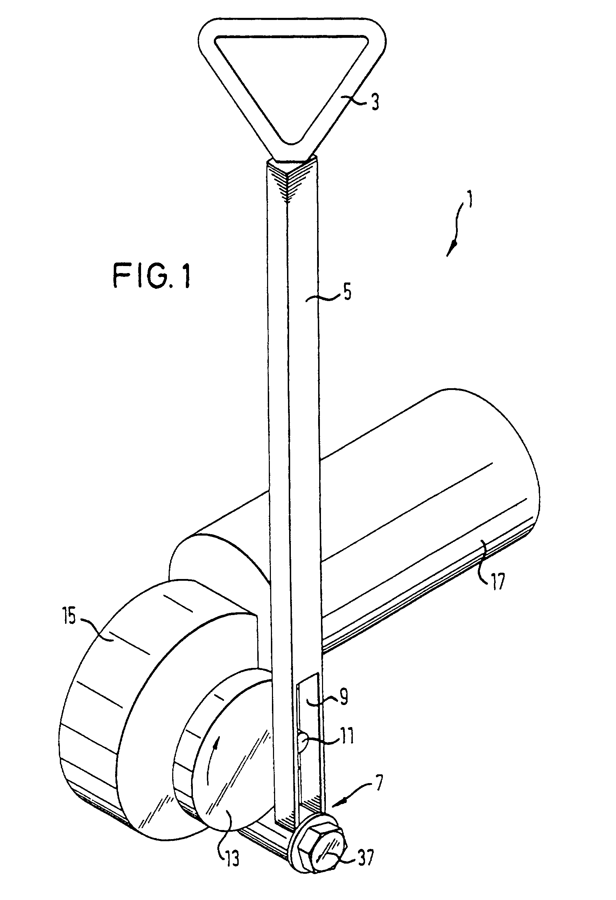

In Figur 1 ist eine erste Ausführungsform einer Einrichtung 1 gezeigt, die eine nicht dargestellte Steckzunge eines Sicherheitsgurtes aus einer zum Ein- und Aussteigen geeigneten Ruhestellung in eine ergonomisch günstige Präsentationsstellung führt. In der Präsentationsstellung kann der Insasse das Beschlagteil leichter greifen, um den Sicherheitsgurt anzulegen. Die Einrichtung umfaßt einen Haltebügel 3 in Form eines Triangel, durch den der Sicherheitsgurt hindurchläuft. Der Haltebügel 3 ist dabei stets unterhalb des auf dem Sicherheitsgurt gleitenden Beschlagteils angeordnet, so daß das Beschlagteil in der in Fig. 1 gezeigten Ruhestellung längs des Sicherheitsgurtes bis zum Haltebügel 3 gleiten kann, um an ihm anzuliegen. Der Haltebügel 3 ist am freien Ende eines Schwenkarms 5 befestigt. Das entgegengesetzte Ende des Schwenkarms 5 kann über eine Schwenklagerung 7 am Fahrzeug angelenkt werden. Eine Ausnehmung im Schwenkarm 5 im Bereich der Schwenklagerung 7 bildet eine Kulisse 9 für einen Mitnehmer 11, der exzentrisch an einer Scheibe 13 befestigt ist. Die Scheibe 13 wird über ein Umlenkgetriebe 15 von einem elektrischen Antrieb 17 in Drehung versetzt. Der so gebildete Exzenterantrieb sorgt für ein Verschwenken des Arms 5 und damit zu einem Verlagern des Haltebügels 3 mit dem Sicherheitsgurt und dem auf dem Haltebügel 3 aufliegenden Beschlagteil in eine ergonomisch günstige Präsentationsstellung, sobald ein Fahrzeuginsasse im Fahrzeug Platz genommen hat.

Bei dem in Figur 1 dargestellten Exzenterantrieb kann der vorgesehene Elektromotor stets in derselben Drehrichtung laufen. Bei einer Umdrehung der Scheibe 13 wird der Haltebügel 3 von der Ruhe- in die Präsentationsstellung und zurück bewegt. Zum Einstellen des Schwenkwinkels ist die Exzentrizität des Mitnehmers 11 auf der Scheibe 13 verstellbar. Darüber hinaus kann vorgesehen sein, daß der Abstand der Mittelachsen von Scheibe 13 und Schwenklagerung 7 verstellbar ist, wodurch der Schwenkwinkel und auch das Drehmoment des Schwenkarms 5 abgestimmt werden können.

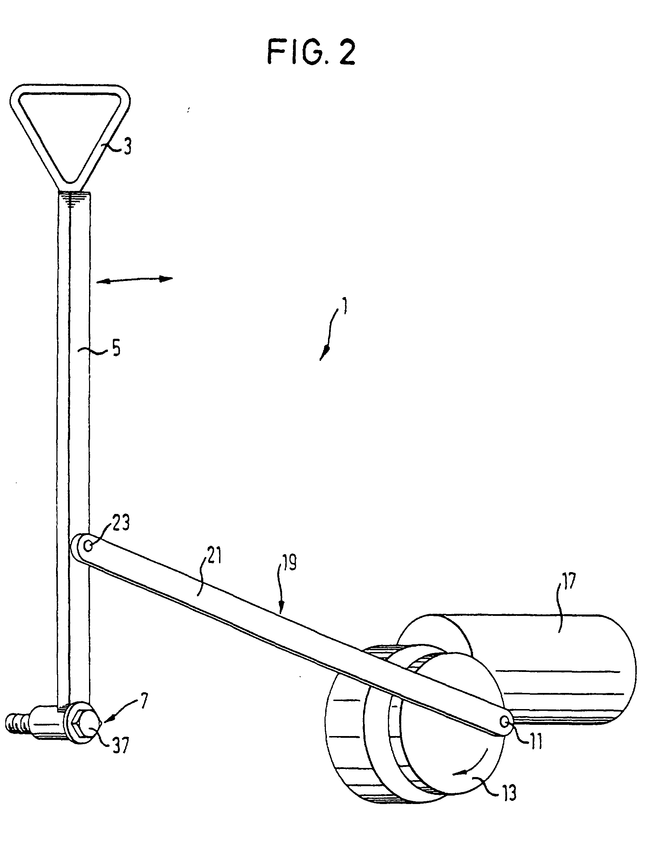

Bei der in Figur 2 gezeigten Ausführungsform der Einrichtung 1 ist ein Schubkurbelgetriebe 19 vorgesehen. Eine Schubstange 21 ist an einem Ende an einem Anlenkpunkt 23 am Schwenkarm 5 und an dem anderen Ende am Mitnehmer 11 der Scheibe 13 schwenkbar gelagert. Die Stellungen und der Schwenkwinkel des Schwenkarms 5 können über Veränderung des Anlenkpunktes 23 und der Exzentrizität des Mitnehmers 11 eingestellt werden. Zudem ist es möglich, die Schubstange 21 längenveränderlich auszubilden, was in Figur 2 jedoch nicht dargestellt ist. Auch bei der in Figur 2 gezeigten Ausführungsform kann der Antrieb 17 stets in einer Drehrichtung laufen.

Der Schwenkarm 5 muß nicht zwingend als einarmiger Hebel ausgebildet sein, sondern kann auch einen Arm eines zweiarmigen Hebels bilden, an dessen anderem Arm der Antrieb angreift.

Im Gegensatz zu der in Figur 1 gezeigten Ausführungsform ist bei den übrigen Ausführungsformen der Antrieb 17 durch Vorsehen der Schubstange 21 weiter von dem Schwenkarm 5 entfernt. Daher kann der Antrieb 17 samt des möglicherweise nötigen Umlenkgetriebes 15 in Stellen im Fahrzeug eingebaut werden, an denen die Unterbringung des relativ großvolumigen Antriebs 17 leichter möglich ist.

Gerade im Bereich der B-Säule ist der zur Verfügung stehende Raum zum Einbau der Einrichtung 1 relativ knapp, da hier ein Gurtaufroller und gegebenenfalls ein Gurtstraffer vorgesehen sind.

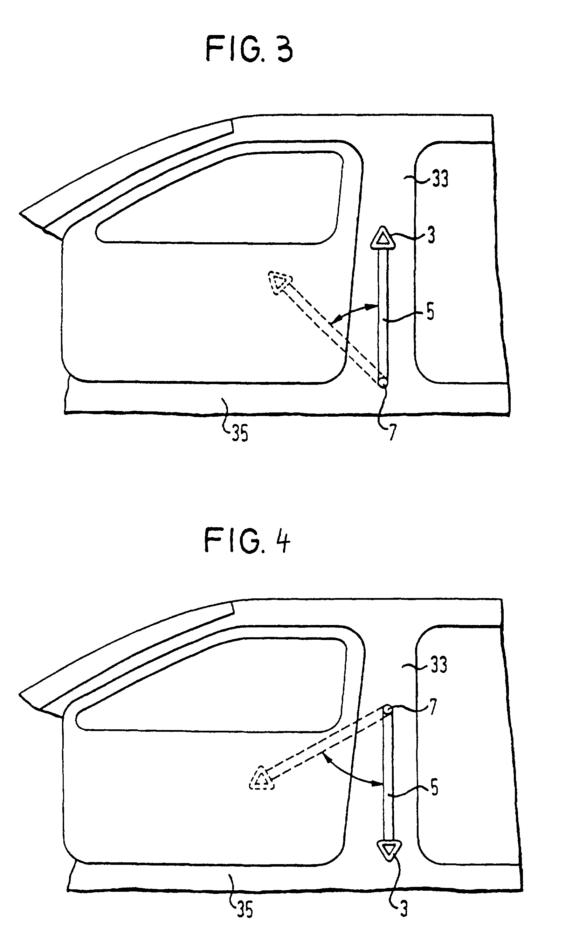

Mögliche Einbaulagen der Einrichtung 1 sind in den Figuren 3 bis 6 dargestellt.

In Figur 3 ist die Schwenkachse 7 im Bereich des Übergangs der B-Säule 33 und dem seitlichen Längsträger angeordnet. Die Schwenklagerung 7 wird einfach mittels einer in den Figuren 1 oder 2 gezeigten Schraube 37 am Fahrzeugrahmen befestigt. In der Ruhestellung, bei abgestelltem Fahrzeug, erstreckt sich der Schwenkarm 5 parallel zur B-Säule 33. Wenn der Insasse jedoch eingestiegen ist, schwenkt durch Betätigung des Antriebs 17 der Schwenkarm 5 nach vom in die mit unterbrochenen Linien dargestellte Präsentationsstellung, in der das auf dem Haltebügel 3 aufliegende Beschlagteil für den Insassen leicht erreichbar gegriffen werden kann, um sich anzugurten. Anschließend wird der Schwenkarm 5 wieder in die Ruhestellung zurückgeführt, die er auch während des Fahrbetriebs einnimmt.

Bei der in Figur 4 dargestellten Einbauvariante ist die Schwenklagerung 7 im oberen Bereich der B-Säule vorgesehen. Der Schwenkarm 5 erstreckt sich von dort aus nach unten und wird schräg aufwärts in die Präsentationsstellung geschwenkt.

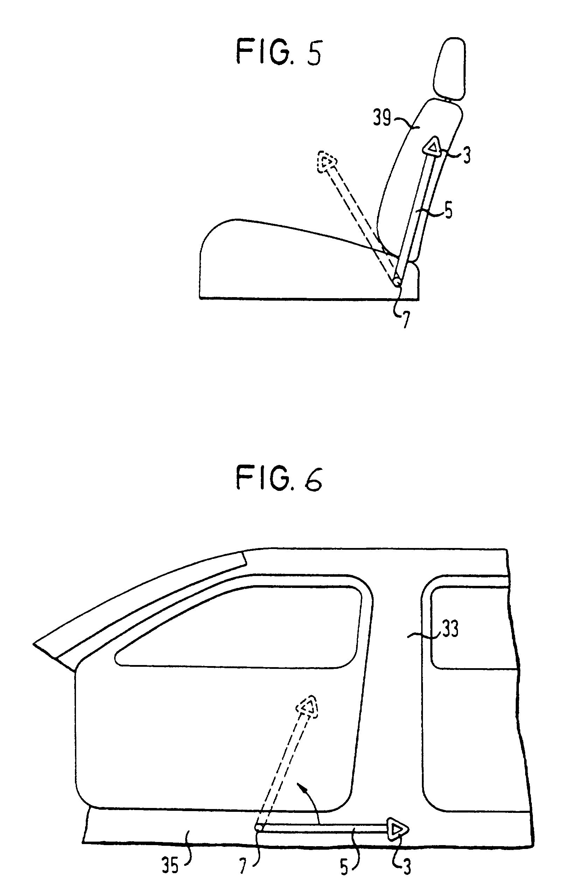

Die gezeigte Einrichtung 1 kann auch Teil eines Fahrzeugsitzes sein, wie dies Figur 5 zeigt. Die Schwenklagerung 7 ist an dem Sitzrahmen (nicht gezeigt) unterhalb der Rückenlehne 39 befestigt. Aus der Ruhestellung, in der der Schwenkarm 5 parallel zur Rückenlehne 39 verläuft, wird er in die Präsentationsstellung, in der er seitlich vorderhalb des Brust- oder Bauchbereichs des Insassen angeordnet ist, bewegt. Diese Einbauvariante hat den Vorteil, daß die Einrichtung 1 zusammen mit dem Fahrzeugsitz bei dessen Verschiebung nach vorn oder nach hinten mit verschoben wird und das Beschlagteil von größeren oder kleineren Fahrzeuginsassen gleichermaßen leicht erreicht werden kann.

Bei der in Figur 6 dargestellten Ausführungsform ist der Schwenkarm 5 an dem seitlichen Längsträger 35 vorderhalb der B-Säule befestigt. Er erstreckt sich in der Ruhestellung parallel zum Längsträger 35 nach vorn oder, wie in Figur 6 gezeigt, nach hinten. Nach dem Einsteigen des Insassen wird der Schwenkarm 5 in eine annähernd vertikale Stellung gebracht.

## Patentansprüche

1. Einrichtung zum Bewegen einer Steckzunge eines Sicherheitsgurtes aus einer zum Ein- und Aussteigen eines Fahrzeuginsassen geeigneten Ruhestellung in eine ergonomisch günstige Präsentationsstellung, in welcher der Insasse das Beschlagteil leicht greifen kann, mit einem Haltebügel (3), der den Sicherheitsgurt erfaßt, und einem Antrieb (17) zum Bewegen des Haltebügels (3), wobei der Haltebügel (3) an einem Schwenkarm (5) angebracht ist und zwischen der Ruhestellung sowie der Präsentationsstellung verschwenkbar ist, **dadurch gekennzeichnet, daß** der Antrieb (17) eine Scheibe (13) mit einem exzentrisch auf ihr angebrachten Mitnehmer (11) in Drehung versetzt, der in eine Kulisse (9) im Schwenkarm (5) eingreift.

2. Einrichtung nach Anspruch 1, **dadurch gekennzeichnet, daß** der Schwenkarm (5) im Bereich der B-Säule (33) am Fahrzeug gelagert und nach unten oder nach oben in die Präsentationsstellung geschwenkt werden kann.

3. Einrichtung nach Anspruch 1, **dadurch gekennzeichnet, daß** der Schwenkarm (5) im unteren Bereich des Fahrzeugsitzes seitlich an diesem gelagert ist.

4. Einrichtung nach Anspruch 1, **dadurch gekennzeichnet, daß** der Schwenkarm (5) am seitlichen Längsträger (35) des Fahrzeugs gelagert ist.

5. Einrichtung nach einem der vorstehenden Ansprüche, **dadurch gekennzeichnet, daß** die Exzentrizität des Mitnehmers (11) verstellbar ist.

6. Einrichtung zum Bewegen einer Steckzunge eines Sicherheitsgurtes aus einer zum Ein- und Aussteigen eines Fahrzeuginsassen geeigneten Ruhestellung in eine ergonomisch günstige Präsentationsstellung, in welcher der Insasse das Beschlagteil leicht greifen kann, mit einem Haltebügel (3), der den Sicherheitsgurt erfaßt, und einem Antrieb (17) zum Bewegen des Haltebügels (3), wobei der Haltebügel (3) an einem Schwenkarm (5) angebracht ist und zwischen der Ruhestellung sowie der Präsentationsstellung verschwenkbar ist, wobei der Antrieb (17) mit einem Schubkurbelgetriebe (19) gekoppelt ist, dessen Schubstange (21) an einem Ende am Schwenkarm angelenkt ist, **dadurch gekennzeichnet, daß** das andere Ende der Schubstange exzentrisch an einer Scheibe (13) angelenkt ist, die vom Antrieb (17) in Drehung versetzt wird, daß die Exzentrizität des Anlenkpunktes (11) der Schubstange (21) an der vom Antrieb (17) in Drehung versetzte Scheibe (13), die Länge der Schubstange (21) und/oder die Lage ihres Anlenkpunktes (23) am Schwenkarm (5) verstellbar ist.

7. Einrichtung nach einem der vorhergehenden Ansprüche, **dadurch gekennzeichnet, daß** sie so ausgebildet ist, daß die Lage des Schwenkbereichs und/oder des Schwenkwinkels des Schwenkarms verstellt werden können/kann.

## Claims

1. A means for moving an insert tongue of a seat belt from a rest position, suitable for a vehicle occupant getting in and out of the vehicle, into an ergonomically favorable presentation position in which the occupant is easily able to grasp the fitting part, comprising a stirrup handle (3) gripping the seat belt, and a drive (17) for moving the stirrup handle (3), the stirrup handle (3) being attached to a swivel arm (5) and adapted to be swiveled between the rest position and the presentation position, **characterized in that** the drive (17) causes a disc (13) having a follower (11) applied eccentrically thereto to be rotated, the follower engaging a guide slot (9) in the swivel arm (5).

2. The means as set forth in claim 1, **characterized in that** the swivel arm (5) is mounted to the vehicle in the region of the B-pillar (33) and can be swivelled downwards or upwards into the presentation position.

3. The means as set forth in claim 1, **characterized in that** the swivel arm (5) is mounted in the lower region of the vehicle seat on the side thereof.

4. The means as set forth in claim 1, **characterized in that** the swivel arm (5) is mounted on the lateral longitudinal beam (35) of the vehicle.

5. The means as set forth in any of the preceding claims, **characterized in that** the eccentricity of the follower (11) is adjustable.

6. A means for moving an insert tongue of a seat belt from a rest position, suitable for a vehicle occupant getting in and out of the vehicle, into an ergonomically favorable presentation position in which the occupant is easily able to grasp the fitting part, comprising a stirrup handle (3) gripping the seat belt, and a drive (17) for moving the stirrup handle (3), the stirrup handle (3) being attached to a swivel arm (5) and adapted to be swiveled between the rest position and the presentation position, the drive (17) being coupled to a slider crank mechanism (19), the slide rod (21) of which is articulated at one end to the swivel arm (5), **characterized in that** the other end of the slide rod is eccentrically articulated to a disc (13) which is caused to be rotated by the drive (17), that the eccentricity of the articulation point (11) of the slide rod (21) at the disc (13) caused to be rotated by the drive (17), the length of the slide rod (21) and/or the position of its articulation point (23) on the swivel arm (5) is adjustable.

7. The means as set forth in any of the preceding claims, **characterized in that** it is constructed such that the position of the swivelling range and/or the swivelling angle of the swivel arm can be adjusted.

## Revendications

1. Dispositif de déplacement d'une languette de verrouillage d'une ceinture de sécurité à partir d'une position de repos, permettant à un passage de monter et de descendre d'un véhicule, jusque dans une position de présentation ergonomique, dans laquelle le passager peut saisir facilement la partie de ferrure, comportant un étrier de maintien (3), qui saisit la ceinture de sécurité, et un dispositif d'entraînement (17) pour déplacer l'étrier de maintien (3), l'étrier de maintien (3) étant fixé sur un bras de pivotement (5) et pouvant pivoter entre la position de repos et la position de présentation, **caractérisé en ce que** le dispositif d'entraînement (17) met en rotation un disque (13) avec un entraîneur (11) placé de manière excentrée sur celui-ci, lequel entraîneur s'engage dans une coulisse (9) du bras de pivotement (5).

2. Dispositif selon la revendication 1, **caractérisé en ce que** le bras de pivotement (5) est monté dans la zone du montant B (33) sur le véhicule et peut être pivoté vers le bas ou vers le haut dans la position de présentation.

3. Dispositif selon la revendication 1, **caractérisé en ce que** le bras de pivotement (5) est logé dans la zone inférieure du siège du véhicule, sur le côté de celui-ci.

4. Dispositif selon la revendication 1, **caractérisé en ce que** le bras de pivotement (5) est monté sur le longeron (35) latéral du véhicule.

5. Dispositif selon l'une quelconque des revendications précédentes, **caractérisé en ce que** l'excentricité de l'entraîneur (11) est réglable.

6. Dispositif de déplacement d'une languette de verrouillage d'une ceinture de sécurité à partir d'une position de repos, permettant à un passage de monter et de descendre d'un véhicule, jusque dans une position de présentation ergonomique, dans laquelle le passager peut saisir facilement la partie de ferrure, comportant un étrier de maintien (3), qui saisit la ceinture de sécurité, et un dispositif d'entraînement (17) pour déplacer l'étrier de maintien (3), l'étrier de maintien (3) étant fixé sur un bras de pivotement (5) et pouvant pivoter entre la position de repos et la position de présentation, le dispositif d'entraînement (17) étant accouplé à un mécanisme bielle-manivelle (19), dont la bielle (21) est articulée à une extrémité sur le bras de pivotement, **caractérisé en ce que** l'autre extrémité de la bielle (21) est articulée excentrée sur un disque (13) qui est mis en rotation par le dispositif d'entraînement (17), en ce que l'excentricité du point d'articulation (11) de la bielle (21) sur le disque (13), mis en rotation par le dispositif d'entraînement (17), est réglable, et en ce que la longueur de la bielle (21) et/ou la position de son point d'articulation (23) sur le bras de pivotement est réglable.

7. Dispositif selon l'une quelconque des revendications précédentes, **caractérisé en ce qu'**il est réalisé de telle sorte que la position de la zone de pivotement et/ou de l'angle de pivotement du bras pivotant sont/est réglable(s).
